# EUROPEAN PATENT SPECIFICATION

(11) **EP 0 841 145 B1**
(45) Date of publication and mention of the grant of the patent: **18.04.2001**
(21) Application number: 97203429.2
(22) Date of filing: 05.11.1997
(51) Int. Cl.: B29C 51/12, B29C 51/10, B29C 70/44

(54) **Production of sheetlike GRP mouldings**
Herstellung von plattenförmigen geformten Gegenständen aus glasfaserverstärktem Kunststoff
Production de pièces moulées en matière plastique renforcée par des fibres de verres en forme de feuille

(30) Priority: 11.11.1996 DE 19646438
(43) Date of publication of application: 13.05.1998
(73) Proprietor: VOSS-Chemie Polyester de Moor, 2500 Lier (BE)
(72) Inventor: De Moor, Remi, 2500 Lier (BE)
(74) Representative: Luys, Marie-José A.H.

(56) References cited:
- EP-A- 0 036 391
- EP-A- 0 419 401
- US-A- 5 234 756
- US-A- 5 322 665
- US-A- 5 407 610

## Description

The invention relates to a process for producing sheetlike mouldings of glass fibre reinforced plastics (GRP), wherein a laminate that consists of a fibre structure impregnated with photocurable, unsaturated polyester resin and is covered on one or both sides with a flexible, expandable polymer film is shaped by deepdrawing and the resin is cured with visible or UV light.

Sheetlike GRP mouldings can be produced by various methods. In the resin transfer moulding (RTM) method a fibre mat is placed between two mould halves and the resin is injected, and is subsequently cured at room temperature or above. This method entails the risk of irregular impregnation and curing, making it difficult to produce homogeneous mouldings, especially when the intended form of the latter is nonplanar. Moreover, relatively long cycle times are required.

EP-A-36 391 describes a process for producing GRP mouldings in which a prepreg comprising a glass fibre mat which is impregnated with thickened photocurable polyester resin and is covered on both sides with an expandable film is deformed by deepdrawing and cured by irradiation with UV light. The addition of thickeners to the resin, and the thickening process, however, are time-consuming operations. However, the direct deepdrawing of fibre mats impregnated with unthickened liquid resin is difficult, especially in the case of complex mouldings, because the deaeration and uniform impregnation of the mat take a very long time, with the result that the binder which holds the fibres in the mat together is dissolved by the resin and the fibres shift, leading to mouldings with an irregular fibre distribution.

It is an object of the present invention, therefore, to develop a simple process for producing sheetlike GRP mouldings which operates with short cycle times and irregularly shaped, sheetlike mouldings.

We have found that this object is achieved if the fibre structure is impregnated with an unthickened resin having a viscosity of less than 1000 cP and if it consists of at least one fibre layer A comprising a glass fibre mat or a laid glass fibre structure having a surface weight of from 100 to 1200 g•m⁻² and of a filter layer B which under atmospheric pressure is barely permeable to the resin but which becomes permeable to the resin under the partial vacuum which prevails in the course of deepdrawing.

The term 'sheetlike' for the purposes of the invention indicates that the GRP mouldings may be not only planar but may also be arcuate, contoured or irregular in shape.

The effect of the filter layer is to allow the air that is present in the glass fibre mat to escape rapidly and uniformly in the course of the impregnating process, enabling relatively short cycle times and the production of mouldings with a uniform fibre distribution without the need for two mould halves.

The fibre structure consists of at least one fibre layer A having a surface weight of from 100 to 1200 g·m⁻², preferably from 350 to 600 g·m⁻², comprising a glass fibre mat or a laid glass fibre structure, and of the filter layer B, which has a surface weight of from 30 to 300 g·m⁻², preferably from 150 to 250 g·m⁻².

Glass fibre mats preferably consist of staple fibres with a length of from 2.5 to 5 cm which are held together by a binder, based for example on styrene-soluble or styrene-insoluble resins. However, mats made from continuous fibres are also suitable, as are laid glass fibre structures comprising fibre weaves or unidirectional fibres, alone or in combination with random fiber plies.

The filter layer B is preferably a loose nonwoven made, for example, from polyester fibers. In the original state, it is from 1 to 5 mm, preferably from 2 to 4 mm, thick and can be compressed by the partial vacuum which prevails in the deepdrawing process to about 10 to 80 %, preferably 20 to 60 %, of its original thickness. Under atmospheric pressure it is impermeable or of only very low permeability to the liquid resin; in the case of the cycle times feasible here, of a few seconds, the resin is able to penetrate into the filter layer superficially at most. Only at the partial vacuum which prevails in the deepdrawing process does it become permeable to the resin, and under suction sates itself with resin.

When using fibre nonwovens with styrene-soluble binders, there may also be dissolution of the binder and thus of the composite fiber structure.

A layer sequence A - B - A is preferred; in some cases a layer sequence - viewed from below - of B - A may be favourable, in which case the filter layer lies directly on the lower covering film, or release agent. The individual layers can be laid on in succession; alternatively, prefabricated combinations, for example A - B - A, can be used.

Unsaturated polyester resins for the purposes of the invention are mixtures of unsaturated polyesters, vinyl esters or vinyl ester urethanes with copolymerizable monomers.

In the narrower sense, unsaturated polyesters are the customary condensation products of polybasic, especially dibasic carboxylic acids and their esterifiable derivatives, especially their anhydrides, with polyhydric, especially dihydric alcohols, which may additionally contain radicals of monobasic carboxylic acids, monohydric alcohols or radicals of hydroxycarboxylic acids, in which case at least some of the radicals must have ethylenically unsaturated copolymerizable groups.

For the purposes of the invention, the term 'unsaturated polyesters' embraces vinyl esters as well.

Vinyl esters are generally understood to be reaction products of polyepoxides with unsaturated monocarboxylic acids, preferably methacrylic acid. These products too are dissolved in unsaturated monomers, preferably styrene. These resins are described, for example, in US-A 3 066 112 and 3 179 623, preference being given to the use of vinyl ester resins based on bisphenol A. They are notable for great toughness and good chemical resistance with limited heat distortion resistance. Vinyl ester resins of epoxy-novolak resins and (meth)acrylic acid, as are described, for example, in US-A 3 256 226, on the other hand, have higher heat distortion resistance but lower toughness.

Finally, vinyl ester urethanes are also suitable as unsaturated polyesters.

These are reaction products of
- a polyfunctional isocyanate,
- with or without a polyhydric alcohol,
- with or without a polyfunctional amine, and
- a hydroxyalkyl (meth)acrylate,
the weight ratio of isocyanate to (alcohol + amine) in the reaction being from 100:0 to 100:300, and the ratio of equivalents of hydroxyalkyl (meth)acrylate to the free isocyanate groups of the reaction product being from 3:1 to 1:2.

The unsaturated polyester resins comprise styrene as monomer. The polyester:styrene ratio is preferably from 20:80 to 90:10, in particular from 50:50 to 75:25. Styrene as comonomer can be replaced in whole or in part by other customary ethylenically polymerizable monomers, examples being vinyl compounds, such as substituted styrenes, esters of acrylic and methacrylic acid, or allyl compounds, such as diallyl phthalate.

Within the laminate, the unsaturated polyester resins are in an unthickened, i.e. liquid form, with a viscosity of less than 1000 cP, preferably from 50 to 500 cP and, in particular, from 100 to 300 cP.

The photocurable polyester resins comprise from 0.01 to 3 % by weight, preferably from 0.1 to 1 % by weight, of a photoinitiator, preferably an acylphosphine oxide or bisacylphosphine oxide. Initiators of these kinds are described at length in EP-A 7 086 or EP-A 184 095 and EP-A 615 980. Preference is given to 2,4,6-trimethylbenzoyldiphenylphosphine oxide. These highly effective photoinitiators can also be employed as a mixture with from 0.1 to 1 % by weight of a conventional photoinitiator, for example benzil dimethyl ketal, benzoin isopropyl ether or diethoxyacetophenone.

To make it suitable for deepdrawing, the laminate of the resin-impregnated fibre structure is covered at least on the top side, i.e. the side opposite the mould, with a flexible, expandable polymer film, for example of polyvinyl alcohol, polyethylene, polyvinyl chloride, polyamide or polyvinylidene chloride, which can be pulled off again after curing. If a covering film at the bottom is provided, it should judiciously be perforated, with the perforations being intended to be permeable to air but not to the relatively viscous resin. Instead of the covering film at the bottom it is also possible to coat the mould with a release agent, for example a wax or a film-forming liquid, which must of course again be permeable to air.

To produce mouldings with a smooth surface it is judicious to apply a gel coat to the bottom and also, if desired, to the top covering film. This coat preferably again consists of a photocurable unsaturated polyester resin. It is from 0.1 to 1 mm, in particular from 0.2 to 0.5 mm, thick and can be applied by knife coating, spreading or spraying onto the covering films. It is judicious to thermoform the gel coat before applying the fibre structure and to partially cure it to such an extent that it becomes tacky, this curing being effected, for example, by means of brief irradiation.

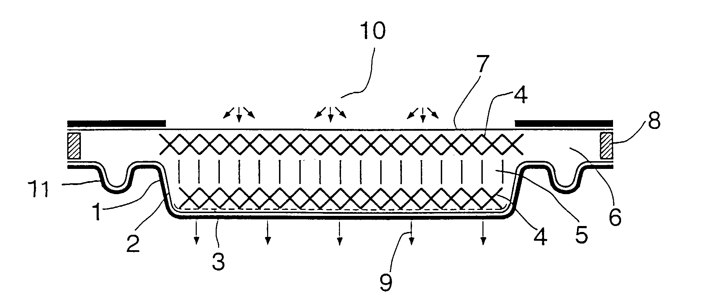

The figure shows, diagrammatically, a preferred embodiment of the novel process. In this embodiment
a) a bottom, perforated covering film (2) is placed on a mould (1),
b) a gel coat (3) is applied to the bottom covering film, is thermoformed and is partially cured,
c) the fiber structure comprising the fiber layers (4) and the filter layer (5) is laid thereon,
d) the liquid resin (6) is applied to the fibre mat, but does not initially penetrate the filter layer,
e) the laminate is covered with the top covering film (7) and sealed at the sides (8),
f) a vacuum (9) is applied to the mould, resulting in the resin being sucked through the filter layer, and
g) the resin is cured by irradiation, for example with UV lamps (10).

The mould preferably consists of GRP. It judiciously has a channel (11), running around its edge on all sides, into which excess resin can flow off. By means of an outlet at the lower end of the channel, this resin can be drained off and recovered. The region above the channel must of course be masked to prevent incident light, so that the resin which has flowed off is not cured in the course of the irradiation.

In the deepdrawing process, a vacuum is applied to the mould in a customary manner. The reduced pressure causes deaeration of the fibre structure, and the resin flows through the filter layer and saturates the fibre structure completely and uniformly. At the same time, the filter layer is compressed and the laminate conforms to the contours of the mould. Depending on the desired form of the moulding, the mould can be planar, arcuate or contoured.

Finally, the resin is cured by brief irradiation with UV or visible light, as is described, for example, in EP-A 7 086. Short cycle times, for example of a few seconds, are sufficient for this operation.

In accordance with the process of the invention it is possible to produce GRP mouldings in inexpensive moulds in small to medium-size production runs, and these mouldings can be used, for example, as automotive components, especially bodywork panels, as trims or coverings, as shells or in the construction of boats.

## Claims

1. A process for producing a fibre-reinforced, sheetlike GRP moulding, wherein a laminate that consists of a fibre structure (4, 5) impregnated with photocurable, unsaturated polyester resin (6) and is covered on one or both sides with a flexible, expandable polymer film (2, 7) is shaped by deepdrawing and the resin is cured with visible or UV light (10), characterised in that the fibre structure (4, 5) is impregnated with an unthickened resin (6) having a viscosity of less than 1000 cP and that it consists of at least one fibre layer A (4) comprising a glass fibre mat or a laid glass fibre structure having a surface weight of from 100 to 1200 g•m⁻² and of a filter layer B (5) which under atmospheric pressure is barely permeable to the resin (6) but which becomes permeable to the resin (6) under the partial vacuum (9) which prevails in the course of deepdrawing.

2. A process as claimed in claim 1,
characterised in that the viscosity of the resin (6) is from 100 to 300 cP.

3. A process as claimed in claim 1,
characterised in that the fibre structure (4, 5) - viewed from below - has the layer sequence B - A or A - B - A.

4. A process as claimed in claim 1,
characterised in that
a) an air-permeable, bottom covering film (2) or a release agent is placed on a mould (1),
b) a gel coat (3) is applied thereto,
c) the fibre structure (4, 5) is laid thereon,
d) the liquid resin (6) is applied to the fibre structure (4, 5), but does not initially penetrate the filter layer (5),
e) the laminate is covered with the top covering film (7) and sealed at the sides (8),
f) a vacuum (9) is applied to the mould (1), resulting in the resin (6) being sucked through the filter layer (5), and
g) the resin (6) is cured by irradiation (10).

5. A process as claimed in claim 4,
characterised in that the mould (1) has a channel (11) which runs around its edge on all sides (8), into which excess resin can flow off and be recovered.

## Patentansprüche

1. Verfahren zum Herstellen eines faserverstärkten, plattenförmigen GRP-Formteils (GRP = glasfaserverstärkter Kunststoff), bei dem ein Laminat, bestehend aus einer Faserstruktur (4, 5), die mit einem fotohärtbaren, ungesättigten Polyesterharz (6) imprägniert und auf einer oder beiden Seiten mit einem flexiblen, expandierbarem Polymerfilm (2, 7) bedeckt ist, durch Tiefziehen geformt und wobei das Harz durch sichtbares oder UV-Licht (10) gehärtet wird,
dadurch gekennzeichnet, dass die Faserstruktur (4, 5) mit einem unverdickten Harz (6) imprägniert wird, das eine Viskosität von weniger als 1000 cP besitzt, und wobei die Faserstruktur (4, 5) besteht aus zumindest einer Faserschicht A (4), umfassend eine Glasfasermatte oder eine gelegte Glasfaserstruktur mit einem Oberflächengewicht von 100 bis 1200 g·m⁻², und einer Filterschicht B (5), die unter Atmosphärendruck für das Harz (6) kaum permeabel ist, aber für das Harz (6) unter Teilvakuum (9), wie es beim Tiefziehen anliegt, permeabel wird.

2. Verfahren nach Anspruch 1,
dadurch gekennzeichnet, dass die Viskosität des Harzes (6) im Bereich von 100 bis 300 cP liegt.

3. Verfahren nach Anspruch 1,
dadurch gekennzeichnet, dass die Faserstruktur (4, 5) - von unten gesehen - die Schichtfolge B-A oder A-B-A besitzt.

4. Verfahren nach Anspruch 1,
dadurch gekennzeichnet, dass
a) ein luftdurchlässiger, den Boden bedeckender Film (2) oder ein Ablöse-Agens auf einer Form (1) angeordnet wird,
b) darauf ein Gelmantel (3) appliziert wird,
c) die Faserstruktur (4, 5) darauf gelegt wird,
d) das flüssige Harz (6) auf die Faserstruktur (4, 5) appliziert wird, aber anfänglich die Filterschicht (5) nicht penetriert,
e) das Laminat mit einem die Oberseite bedeckenden Film (7) bedeckt und an den Seiten (8) versiegelt wird,
f) ein Vakuum (9) an die Form (1) angelegt wird, wodurch das Harz (6) durch die Filterschicht (5) gesogen wird, und
g) das Harz (6) durch Bestrahlung (10) gehärtet wird.

5. Verfahren nach Anspruch 4,
dadurch gekennzeichnet, dass die Form (1) einen Kanal (11) besitzt, der entlang ihrer Kante auf allen Seiten (8) verläuft, und in den überschüssiges Harz abfließen und aus dem es zurückgewonnen werden kann.

## Revendications

1. Procédé de production d'une pièce moulée de GRP du type feuille, renforcée de fibres, dans lequel un stratifié qui se compose d'une structure fibreuse (4, 5) imprégnée d'une résine de polyester insaturé, photodurcissable (6) et qui est recouvert d'un ou des deux côtés d'un film de polymère expansible, flexible (2, 7) est façonné par emboutissage et la résine est durcie avec de la lumière visible ou U.V. (10), caractérisé en ce que la structure fibreuse (4, 5) est imprégnée d'une résine non épaissie (6) ayant une viscosité inférieure à 1000 CP et en ce qu'elle se compose d'au moins une couche de fibres A (4) comprenant un matelas de fibres de verre ou une structure de fibres de verre étalées ayant un poids en surface de 100 à 1200 g•m⁻² et d'une couche filtrante B (5) qui sous la pression atmosphérique est faiblement perméable à la résine (6) mais qui devient perméable à la résine (6) sous le vide partiel (9) qui règne au cours de l'emboutissage.

2. Procédé suivant la revendication 1, caractérisé en ce que la viscosité de la résine (6) est de 100 à 300 cP.

3. Procédé suivant la revendication 1, caractérisé en ce que la structure fibreuse (4, 5) - vue de dessous - présente la séquence de couches B - A ou A - B - A.

4. Procédé suivant la revendication 1, caractérisé en ce que
a) un film de recouvrement de fond, perméable à l'air (2) ou un agent de démoulage est placé sur un moule (1),
b) une couche de gel (3) y est appliquée,
c) la structure fibreuse (4, 5) est disposée dessus,
d) la résine liquide (6) est appliquée sur la structure fibreuse (4, 5), mais ne pénètre pas initialement la couche filtrante (5),
e) le stratifié est recouvert du film de recouvrement supérieur (7) et scellé sur les côtés (8),
f) un vide (9) est appliqué au moule (1), faisant ainsi que la résine (6) est aspirée à travers la couche filtrante (5), et
g) la résine (6) est durcie par irradiation (10).

5. Procédé suivant la revendication 4, caractérisé en ce que le moule (1) comporte un canal (11) qui s'étend tout autour de son bord de tous côtés (8), dans lequel l'excès de résine peut s'écouler et être récupéré.
